# DEMANDE DE BREVET EUROPEEN

(11) **EP 1 719 641 A1**
(43) Date de publication de la demande: **08.11.2006**
(21) Numéro de dépôt: 06290702.7
(22) Date de dépôt: 03.05.2006
(51) Int. Cl.: B60B 27/02, F16C 17/00

(54) **Moyeu pour véhicule à au moins une roue, roue et cadre incorporant un tel moyeu**

(30) Priorité: 03.05.2005 FR 0504478
(71) Demandeur: BIRON, 78490 Montfort l'Amaury (FR)
(72) Inventeur: Biron, Didier, 78490 Monfort l'Amaury (FR)
(74) Mandataire: Bolinches, Michel Jean-Marie

(57) **Abrégé**

La présente invention concerne un moyeu (1) destiné à équiper un véhicule à au moins une roue, tel qu'une bicyclette, ledit moyeu comprenant un arbre (2) et un corps de moyeu autour dudit arbre qui sont montés en rotation l'un par rapport à l'autre, ledit corps de moyeu comportant un carter central (3) et des flasques d'extrémités (4 et 5) adaptés pour recevoir des moyens de liaison entre ledit moyeu et une jante de ladite roue, ledit arbre étant pourvu d'au moins un palier (14, 15) de positionnement axial et radial dudit corps de moyeu par rapport audit arbre.

Selon l'invention, ledit moyeu est tel qu'au moins une rainure (20) sensiblement axiale par rapport audit arbre est formée dans ledit ou chaque palier, ladite ou chaque rainure étant conçue pour former un canal de circulation d'un film de lubrifiant prévu entre ledit corps de moyeu et ledit arbre, de sorte à optimiser la rotation relative dudit moyeu et dudit arbre.

## Description

La présente invention concerne un moyeu destiné à équiper un véhicule à au moins une roue, tel qu'une bicyclette, une roue et un cadre pour un tel véhicule pourvus chacun dudit moyeu. L'invention concerne notamment un moyeu pour une roue avant ou arrière ou pour un boîtier de pédalier d'une bicyclette, mais peut également s'étendre à d'autres types de roues.

De façon connue, un moyeu se compose d'un corps sur lequel sont accrochés des éléments de liaison à la jante, éléments qui peuvent être des rayons, des bâtons, ou des disques (forme lenticulaire ou paraculaire). Le corps contient généralement un ou plusieurs roulements qui assurent sa rotation par rapport à son axe, axe qui est ensuite assemblé sur la fourche pour la roue avant ou bien sur le cadre pour la roue arrière, par exemple.

Pour ce type de montage, la rotation entre le corps et l'axe est assurée par des roulements à billes, coniques ou bien à aiguilles. Quels que soient les roulements utilisés, leurs dimensions ne cessent de diminuer afin d'optimiser le poids et la taille des moyeux, ce qui n'est pas sans conséquence sur leur longévité. De plus les qualités de frottement de roulement en fonction des matériaux et des graisses utilisés atteignent leurs limites.

Le document DE-A-196 04 194 décrit un moyeu pour roue de bicyclette comportant un corps de moyeu monté mobile autour d'un arbre, via des paliers à glissement de forme tronconique assurant un positionnement axial et radial du corps de moyeu par rapport à l'arbre.

Un but de l'invention est de proposer un moyeu destiné à équiper un véhicule à au moins une roue, tel qu'une bicyclette, ledit moyeu comprenant un arbre et un corps de moyeu autour dudit arbre qui sont montés en rotation l'un par rapport à l'autre, ledit corps de moyeu comportant un carter central et des flasques d'extrémités adaptés pour recevoir des moyens de liaison entre ledit moyeu et une jante de ladite roue, ledit arbre étant pourvu d'au moins un palier de positionnement axial et radial dudit corps de moyeu par rapport audit arbre, qui permette notamment d'améliorer l'ajustement entre ledit corps de moyeu et ledit arbre en prévoyant un film de lubrifiant entre ces deux pièces, pour optimiser le rendement lors de la rotation.

A cet effet, ledit moyeu selon l'invention est tel qu'au moins une rainure sensiblement axiale par rapport audit arbre est formée dans ledit ou chaque palier, ladite ou chaque rainure étant conçue pour former un canal de circulation d'un film de lubrifiant prévu entre ledit corps de moyeu et ledit arbre, de sorte à optimiser la rotation relative dudit moyeu et dudit arbre.

On notera que le moyeu de l'invention n'utilise pas de roulements, la rotation relative entre le corps de moyeu et l'arbre étant assurée par un ajustement précis entre ces deux pièces et un film de lubrifiant, pour obtenir un rendement d'excellente qualité.

On notera également que ledit moyeu présente une très grande précision de guidage, qui permet en particulier d'assurer une meilleure tenue de cap d'une roue équipée d'un tel moyeu.

On notera en outre que ledit moyeu ne nécessite aucun réglage ni au montage, ni après une période de rodage.

Selon une autre caractéristique de l'invention, ladite ou chaque rainure peut être délimitée par deux bords sensiblement axiaux dont l'un au moins est chanfreiné, ledit ou chaque bord chanfreiné étant destiné à former une entrée pour ledit lubrifiant lors de son écoulement dans une direction circonférentielle et dans un sens déterminé autour dudit arbre.

De préférence, ledit ou chaque bord chanfreiné présente un chanfrein formant un angle rentrant avec une surface sensiblement cylindrique définissant la face radialement externe dudit ou chaque palier.

A titre encore plus préférentiel, chacun des deux bords sensiblement axiaux de ladite ou chaque rainure est chanfreiné.

Avantageusement, ledit ou chaque palier peut présenter une pluralité desdites rainures qui sont circonférentiellement espacées autour dudit arbre.

Encore plus avantageusement, ledit arbre peut être pourvu d'une paire desdits paliers qui sont espacés axialement autour dudit arbre.

Selon une autre caractéristique de l'invention, un volume libre destiné à constituer une réserve dudit lubrifiant peut être formé entre ledit carter et ledit arbre.

Selon une autre caractéristique de l'invention, lesdits flasques peuvent être montés serrés sur ledit carter central et indexés l'un par rapport à l'autre.

Avantageusement, deux joints d'étanchéité peuvent être respectivement montés serrés radialement à l'intérieur desdits flasques et montés glissants sur ledit arbre, de sorte à réaliser une étanchéité statique et dynamique dans ledit moyeu.

Selon une autre caractéristique de l'invention, ledit carter central peut présenter un orifice qui est destiné au remplissage dudit lubrifiant et qui est obturé par un obturateur, tel qu'une vis.

Selon une autre caractéristique de l'invention, ledit arbre peut être pourvu à chacune de ses extrémités respectives de deux butées axiales qui sont montées autour dudit arbre via des joints toriques.

Une roue selon l'invention pour véhicule à au moins une roue, tel qu'un bicyclette, est caractérisée en ce qu'elle est pourvue dudit moyeu de l'invention tel que défini ci-dessus, dans lequel ledit corps de moyeu est monté mobile autour dudit arbre fixe.

Un cadre selon l'invention pour véhicule à au moins une roue, tel qu'une bicyclette, est caractérisé en ce qu'il est pourvu dudit moyeu de l'invention tel que défini ci-dessus, dans lequel ledit arbre est monté mobile à l'intérieur dudit corps de moyeu qui est monté fixe sur ledit cadre, ledit corps de moyeu étant par exemple monté solidaire de manivelles recevant des pédales dans un boîtier de pédalier d'une bicyclette.

Afin d'aider à la compréhension de l'invention, une description détaillée sera faite en s'appuyant sur l'ensemble des figures annexées.
- la figure 1 est une vue axonométrique d'un moyeu avant de roue de bicyclette correspondant à l'invention,
- la figure 2 est une vue en coupe longitudinale dudit moyeu selon le plan II-II de la figure 1,

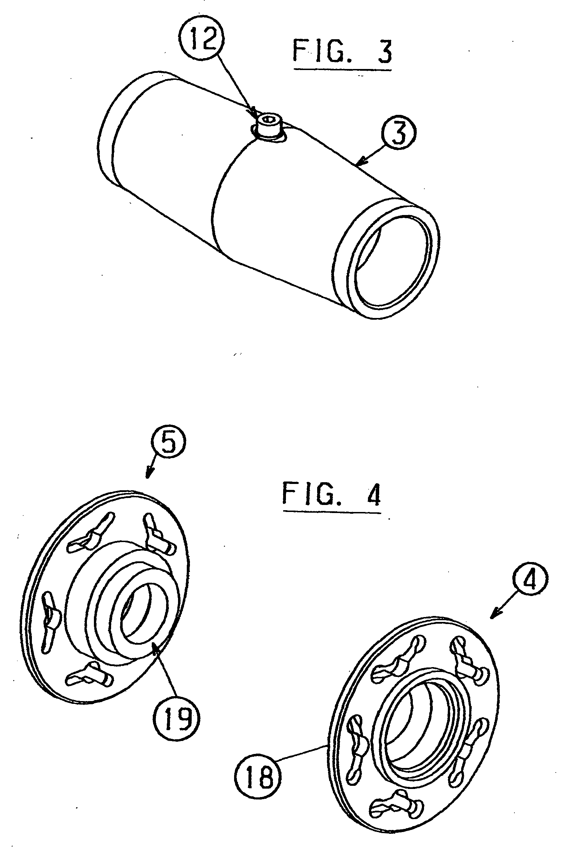

- la figure 3 est une vue axonométrique du carter central dudit moyeu de la figure 1,
- la figure 4 est une vue axonométrique des flasques destinés à être montés sur ledit carter,
- la figure 5 est une vue axonométrique de l'arbre dudit moyeu, et
- la figure 6 est une vue axonométrique des butées axiales dudit moyeu.

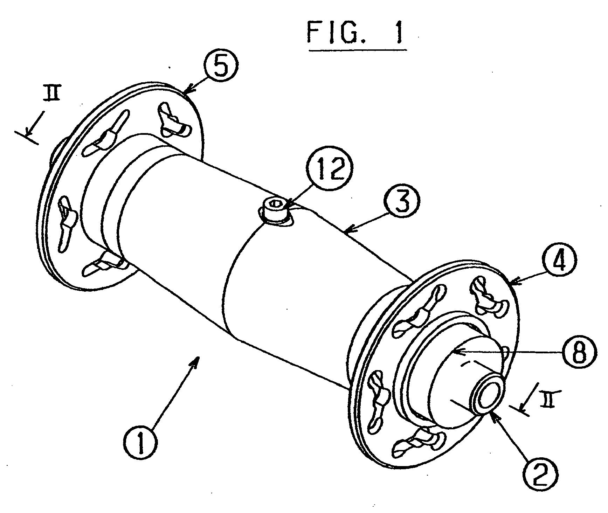

La figure 1 représente une déclinaison possible de l'invention avec un moyeu 1 prévu pour une roue de bicyclette à rayons. Mais il est bien évident que l'invention reste valable pour tous les types de moyens de liaison entre le moyeu 1 et la jante de roue (e.g. bâtons, disques, rayons ou corps de moyeu réalisant cette liaison).

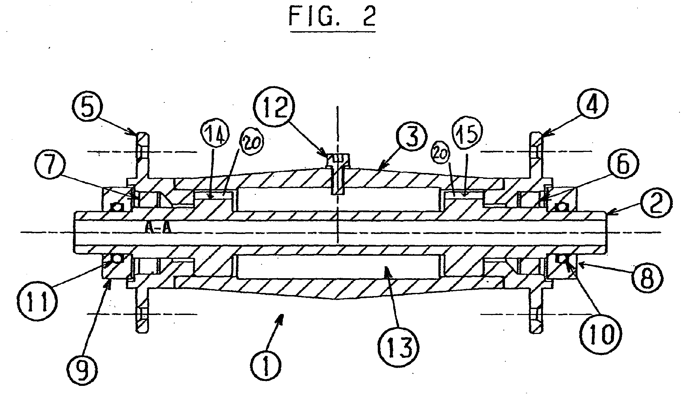

La figure 2 est une vue en coupe longitudinale du moyeu 1 de la figure 1. Selon le mode de réalisation représenté, l'arbre 2 est creux, ce qui permet le passage d'un axe de blocage rapide dans le cas d'une utilisation sur une bicyclette de type vélo de route. Dans le cas d'une utilisation sur une bicyclette de type vélo de piste, il est bien évident que cet arbre serait plein, avec un filetage à chaque extrémité permettant le montage d'écrous.

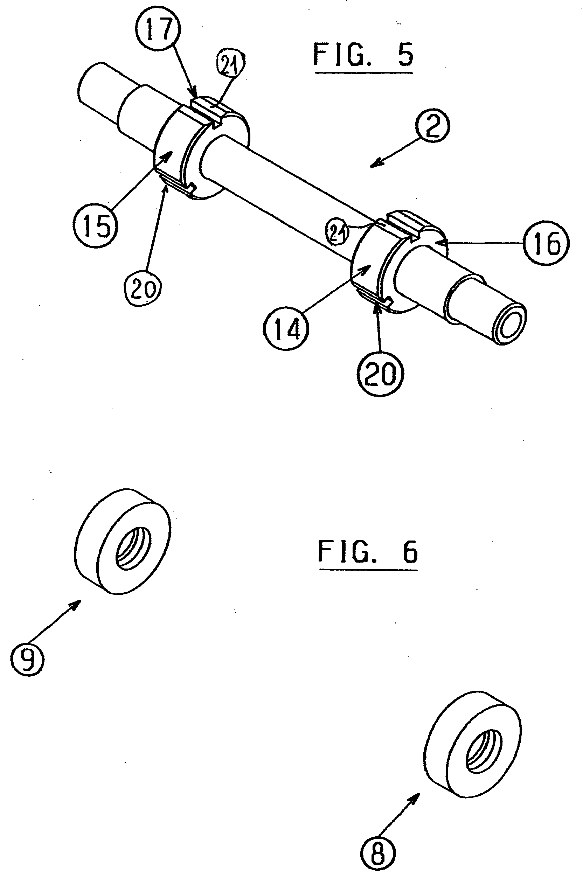

La rotation entre le corps du moyeu, formé par le carter central 3 et les flasques 4 et 5 fixés entre eux, et l'arbre 2, est assurée par un ajustement précis au niveau de deux paliers 14 et 15 qui sont notamment visibles sur la figure 5. L'arrêt en translation de l'arbre 2 est assuré par la mise en contact des surfaces radiales axialement externes 16 et 17 respectives des paliers 14 et 15 avec les surfaces 18 et 19 respectives des flasques 4 et 5 (voir figure 4). Les dimensions et formes des paliers 14 et 15 et des butées ne sont pas limitatives pour la présente invention.

Sur la figure 2, le volume libre 13 entre le corps du moyeu et l'arbre 2 sert de réserve, afin de stocker le volume de lubrifiant nécessaire à la bonne rotation du corps de moyeu par rapport à l'arbre 2. Le remplissage s'effectue par l'orifice prévu sur le carter 3 et obturé par une vis 12, mais il peut s'effectuer par un orifice réalisé sur une autre des pièces donnant accès au volume 13, ou bien encore s'effectuer lors de l'assemblage des différentes pièces qui constituent ce moyeu 1.

Le type de lubrifiant utilisé est une huile de synthèse, mais en aucun cas la qualité, le volume, ni la forme de ce volume de lubrifiant ne constituent un élément limitatif de l'invention. Le fonctionnement correct de ce moyeu 1 passe par une bonne répartition du lubrifiant sur les paliers 14 et 15.

Pour cela, sont prévues sur chaque palier 14, 15 une pluralité de rainures 20 sensiblement axiales qui servent de canaux d'alimentation du lubrifiant à l'interface arbre 2 / corps de moyeu, et qui sont chacune associées à au moins un bord axial chanfreiné 21 (deux bords chanfreinés 21 par rainure 20 dans l'exemple de la figure 5), afin de garantir un film de lubrifiant homogène. Là aussi d'autres formes ainsi qu'une quantité différente de rainures 20 sont possibles sans pour autant sortir du cadre de l'invention.

L'étanchéité dynamique de l'ensemble est assurée par deux joints 6 et 7 montés fixes sur les flasques 4 et 5. D'autres systèmes d'étanchéité peuvent également être envisagés.

Dans un mode préférentiel de réalisation de l'invention, le montage du moyeu est effectué de la façon suivante.

Le flasque 4 est monté serré dans le carter central 3, l'arbre 2 est positionné à l'intérieur du carter 3 et mis en butée sur le flasque 4, le flasque 5 est alors monté serré sur le carter 3 avec un indexage en rotation afin de le placer correctement par rapport au flasque 4 pour le montage des rayons de la roue.

Les joints d'étanchéité dynamique 6 et 7 sont alors montés respectivement à l'intérieur des flasques 4 et 5. Les joints toriques 10 et 11 sont mis en place sur les butées axiales 8 et 9 qui sont ensuite respectivement montées aux deux extrémités de l'arbre 2.

Le remplissage du moyeu 1 en lubrifiant est effectué, puis l'étanchéité finale est assurée par le montage de la vis 12 associée à un joint (non illustré).

Le moyeu 1 est ainsi prêt à être assemblé à la jante.

Comme cela a été précisé au début de la présente description, le moyeu 1 pourrait également, sans pour autant sortir du champ d'application de l'invention, être assemblé sur un cadre de véhicule, et plus particulièrement de bicyclette, au niveau du boîtier de pédalier dudit véhicule. Ainsi, le corps de moyeu serait solidaire du cadre et son arbre 2 serait dans ce cas solidaire de manivelles recevant des pédales du boîtier de pédalier.

## Revendications

1. Moyeu (1) destiné à équiper un véhicule à au moins une roue, tel qu'une bicyclette, ledit moyeu comprenant un arbre (2) et un corps de moyeu autour dudit arbre qui sont montés en rotation l'un par rapport à l'autre, ledit corps de moyeu comportant un carter central (3) et des flasques d'extrémités (4 et 5) adaptés pour recevoir des moyens de liaison entre ledit moyeu et une jante de ladite roue, ledit arbre étant pourvu d'au moins un palier (14, 15) de positionnement axial et radial dudit corps de moyeu par rapport audit arbre, **caractérisé en ce qu'**au moins une rainure (20) sensiblement axiale par rapport audit arbre est formée dans ledit ou chaque palier, ladite ou chaque rainure étant conçue pour former un canal de circulation d'un film de lubrifiant prévu entre ledit corps de moyeu et ledit arbre, de sorte à optimiser la rotation relative dudit moyeu et dudit arbre.

2. Moyeu (1) selon la revendication 1, **caractérisé en ce que** ladite ou chaque rainure (20) est délimitée par deux bords (21) sensiblement axiaux dont l'un au moins est chanfreiné, ledit ou chaque bord chanfreiné étant destiné à former une entrée pour ledit lubrifiant lors de son écoulement dans une direction circonférentielle et dans un sens déterminé autour dudit arbre (2).

3. Moyeu (1) selon la revendication 2, **caractérisé en ce que** ledit ou chaque bord chanfreiné (21) présente un chanfrein formant un angle rentrant avec une surface sensiblement cylindrique définissant la face radialement externe dudit ou chaque palier (14, 15).

4. Moyeu (1) selon la revendication 2 ou 3, **caractérisé en ce que** chacun des deux bords (21) sensiblement axiaux de ladite ou chaque rainure (20) est chanfreiné.

5. Moyeu (1) selon une des revendications précédentes, **caractérisé en ce que** ledit ou chaque palier (14, 15) présente une pluralité desdites rainures (20) qui sont circonférentiellement espacées autour dudit arbre (2).

6. Moyeu (1) selon une des revendications précédentes, **caractérisé en ce que** ledit arbre (2) est pourvu d'une paire desdits paliers (14 et 15) qui sont espacés axialement autour dudit arbre.

7. Moyeu (1) selon une des revendications précédentes, **caractérisé en ce qu'**un volume libre (13) destiné à constituer une réserve dudit lubrifiant est formé entre ledit carter (3) et ledit arbre (2).

8. Moyeu (1) selon une des revendications précédentes, **caractérisé en ce que** lesdits flasques (4 et 5) sont montés serrés sur ledit carter central (3) et indexés l'un par rapport à l'autre.

9. Moyeu (1) selon une des revendications précédentes, **caractérisé en ce que** deux joints d'étanchéité (6 et 7) sont respectivement montés serrés radialement à l'intérieur desdits flasques (4 et 5) et montés glissants sur ledit arbre (2), de sorte à réaliser une étanchéité statique et dynamique dans ledit moyeu.

10. Moyeu (1) selon une des revendications précédentes, **caractérisé en ce que** ledit carter central (3) présente un orifice qui est destiné au remplissage dudit lubrifiant et qui est obturé par un obturateur (12), tel qu'une vis.

11. Moyeu (1) selon une des revendications précédentes, **caractérisé en ce que** ledit arbre (2) est pourvu à chacune de ses extrémités respectives de deux butées axiales (8 et 9) qui sont montées autour dudit arbre via des joints toriques (10 et 11).

12. Roue pour véhicule à au moins une roue, tel qu'un bicyclette, **caractérisée en ce qu'**elle est pourvue d'un moyeu (1) selon une des revendications précédentes dans lequel ledit corps de moyeu est monté mobile autour dudit arbre (2) fixe.

13. Cadre pour véhicule à au moins une roue, tel qu'une bicyclette, **caractérisé en ce qu'**il est pourvu d'un moyeu (1) selon une des revendications 1 à 11 dans lequel ledit arbre (2) est monté mobile à l'intérieur dudit corps de moyeu qui est monté fixe sur ledit cadre, ledit corps de moyeu étant par exemple monté solidaire de manivelles recevant des pédales dans un boîtier de pédalier d'une bicyclette.
